# EUROPÄISCHE PATENTSCHRIFT

(11) **EP 0 871 278 B1**
(45) Veröffentlichungstag und Bekanntmachung des Hinweises auf die Patenterteilung: **10.10.2001**
(21) Anmeldenummer: 98103934.0
(22) Anmeldetag: 05.03.1998
(51) Int. Cl.: H02K 5/24

(54) **Anordnung zur schwingungsisolierenden Aufhängung eines Elektromotors**
Assembly for the vibration free suspension of an electrical motor
Assemblage pour la suspension libre de vibrations d'un moteur

(30) Priorität: 08.04.1997 DE 29706216 U
(43) Veröffentlichungstag der Anmeldung: 14.10.1998
(73) Patentinhaber: ebm Werke GmbH & Co. KG, 74673 Mulfingen (DE)
(72) Erfinder: Neckermann,Marcus,Dipl.-Ing.FH, 97900 Lauda-Königshofen (DE); Wengrzik,Heinz, 97980 Bad Mergentheim (DE)
(74) Vertreter: Patentanwälte Dr. Solf & Zapf

(56) Entgegenhaltungen:
- DE-A- 2 809 354
- DE-A- 4 121 927
- DE-U- 9 303 162
- GB-A- 1 318 779
- US-A- 2 652 997
- US-A- 2 830 752

## Beschreibung

Die vorliegende Erfindung betrifft eine Anordnung zur schwingungsisolierenden bzw. schwingungsgedämpften Aufhängung eines Elektromotors, insbesondere eines Lüftermotors in einem Lüftergehäuse, wobei ein nicht-rotierendes Motor-Tragelement zumindest einseitig über ein einstückiges Elastikelement mit einem Trägerteil verbunden ist. Dabei ist das Tragelement insbesondere als eine längliche Tragachse ausgebildet.

Ein mit einer solchen Anordnung ausgestatteter Lüfter ist aus der US-A-2 830 752 bekannt. Hierbei greift die Tragachse mit jedem ihrer beiden Enden direkt verdrehfest in einen Gummiblock ein, der seinerseits verdrehfest an einem sternartigen Trägerteil gehaltert ist. Hierdurch sollen einerseits Verdrehungen der Tragachse verhindert werden, und andererseits soll eine Schwingungsdämpfung zwischen der Tragachse und dem Lüftergehäuse erreicht werden.

Ähnliche Anordnungen sind aus der DE 41 21 927 A1 und der DE-C-1 175 785 bekannt. In beiden Fällen sind ebenfalls gummielastische Elemente zur Halterung des Motors vorgesehen.

Die GB-A-1 318 779 beschreibt einen Antriebsmotor für eine Trommelwaschmaschine, wobei der Motor ebenfalls im Sinne des Oberbegriffs des Anspruchs 1 beidseitig über Vibrationsisolationselemente aufgehängt ist. Dabei handelt es sich jeweils um eine Schicht aus einem gummielastischen Material, die axial zwischen einer Achse und einem Halteelement angeordnet ist. In diesem Dokument werden mehrere verschiedene Ausführungen von Vibrationsisolationsteilen beschrieben. In einer ersten Ausführung handelt es sich jeweils um einen blockartigen, zylindrischen Vollkörper mit beidendiger Schraubbefestigung. Bei weiteren Ausführungen ist jeweils ein gummielastisches Material Stoffschlüssig zwischen gehäuseartigen Trägerteilen angeordnet, wobei auch hier die Trägerteile über Schraubbefestigungen gehalten sind.

In manchen Anwendungsfällen ist es nachteilig, daß vor allem beim Anlauf des Elektromotors, aber auch bei schnellen Drehzahländerungen, Reaktionsmomente erzeugt werden, die zunächst aufgrund der stets sehr starren Verbindung zwischen dem Motor bzw. dessen Stator und dem Tragelement bzw. der Tragachse auf die Tragachse übertragen werden. Die Tragachse führt dadurch jeweils eine leichte ruckartige Drehbewegung aus. Mit den bekannten Gummielementen hat sich gezeigt, daß diese ruckartigen Drehbewegungen der Tragachse nachteiligerweise auf das jeweilige Trägerteil und damit auch auf das Gehäuse übertragen werden. Dies führt zu einer störenden Geräuschentwicklung, die als leichtes "Klacken" zu hören ist. Vor allem bei Anwendungsfällen, wobei Motoren mit mehreren Drehzahlstufen zum Einsatz kommen, wie dies beispielsweise bei Lüftermotoren in Dunstabzugshauben der Fall ist, ist bei jeder Drehzahländerung ein solches "Klacken" zu hören. Wenn der Motor bzw. das Gebläse in relativ großvolumigen Geräten mit relativ dünnen Seitenwänden zum Einsatz kommt, ist dieses Geräusch infolge von Körperschallübertragung deutlich wahrnehmbar und daher außerordentlich störend.

Der vorliegenden Erfindung liegt die Aufgabe zugrunde, eine gattungsgemäße Anordnung zur Motoraufhängung zu schaffen, mit der eine effektive Reduzierung der Entwicklung von störenden Geräuschen erreicht wird.

Erfindungsgemäß wird dies dadurch erreicht, daß das Elastikelement aus drei axial hintereinanderliegenden Abschnitten besteht, und zwar einem verdrehfest über eine in Drehrichtung des Motors formschlüssige und dadurch Relativverdrehungen verhinderte Steckverbindung mit dem Trägerteil verbundenen Träger - Verbindungsabschnitt, einem ebenfalls verdrehfest über eine in Drehrichtung des Motors formschlüssige und dadurch Relativverdrehung verhindernde Steckverbindung mit dem Tragelement verbundenen Motor-Verbindungsabschnitt sowie einem axial zwischen den beiden Verbindungsabschnitten angeordneten, elastisch tordierbaren Zwischenabschnitt.

Hierbei ist im Zusammenhang mit der Erfindung unter dem Begriff "verdrehfest" zu verstehen, daß eine Relativverdrehung der miteinander verbundenen Teile ausgeschlossen ist, d.h. es wird eine Sicherung gegen Verdrehen erreicht. Hierzu ist das Elastikelement über in Drehrichtung des Motors formschlüssige und dadurch Relativverdrehungen verhindernde Steckverbindungen mit dem Tragelement und mit dem Trägerteil verbunden. Auf diese Weise wird auch eine besonders einfache Montage der Einzelteile durch einfaches Zusammenstecken ermöglicht.

Das erfindungsgemäße Elastikelement führt aufgrund des speziellen Zwischenabschnittes zu wesentlichen Vorteilen. Der Zwischenabschnitt ist hauptsächlich verantwortlich für die Isolations- bzw. Dämpfungseigenschaften des Elastikelementes, wobei er vorteilhafterweise bei Auftreten von Reaktionsmomenten elastisch tordierbar ist. Dabei lassen sich vorteilhafterweise die Eigenschaften bezüglich der Isolation bzw. Dämpfung von Schwingungen und Reaktionsmomenten durch Materialauswahl und/oder Auslegung der Länge und/oder des Querschnittes des Zwischenabschnittes in einem weiten Bereich beeinflussen (einstellen). Beispielsweise erhöht sich die Torsionssteifigkeit durch eine Vergrößerung des Querschnitts des Zwischenabschnitts, und eine axiale Verlängerung dieses Abschnitts führt zu einer Reduzierung der Torsionssteifigkeit. Die bei schnellen Drehzahländerungen und insbesondere beim Anlauf des Motors auftretenden, ruckartigen Drehbewegungen des Tragelements bzw. der Tragachse werden durch erfindungsgemäß ermöglichte elastische Torsionen insbesondere im Bereich des Zwischenabschnittes so ausgeglichen und isoliert bzw. gedämpft, daß eine Übertragung auf das Trägerteil praktisch ausgeschlossen ist. Dadurch werden störende (Klack-)Geräusche sicher vermieden.

Durch die Erfindung können vor allem folgende Vorteile erreicht werden:
- Hohe Federsteifigkeit sowohl in axialer als auch in radialer Richtung. Dadurch wird sicher verhindert, daß im Falle einer Verwendung zur Aufhängung eines Lüftermotors in einem Lüftergehäuse das Lüfterrad am Gehäuse streift.
- Geringe Torsionssteifigkeit und dabei nahezu lineare bis hin zu degressiver Federkennlinie; gute Schwingungsisolation auch von dem Motordrehmoment überlagerten Pendelmomenten.
- Einfache Montage vorzugsweise ohne Schraubverbindungen, d.h. einfaches Zusammenstecken; dadurch sehr kostengünstige Herstellung.
- Vermeidung von vulkanisierten Metall-Elastomer-Verbindungen.
- Vorteilhaft geringer Einfluß von insbesondere axialen Maßtoleranzen der Einzelteile der erfindungsgemäßen Anordnung auf die Torsionssteifigkeit und somit auf die grundsätzliche Funktion der Schwingungs- und Torsionsisolation, da die Torsionssteifigkeit des Elastikelementes nahezu unabhängig von der Höhe einer axialen Verspannung ist.

Weitere vorteilhafte Ausgestaltungsmerkmale der Erfindung sind in den Unteransprüchen sowie der folgenden Beschreibung enthalten.

Anhand eines in der beiliegenden Zeichnung veranschaulichten, bevorzugten Ausführungsbeispiels soll im folgenden die Erfindung näher erläutert werden. Dabei ist beispielhaft die Verwendung bei einem Radialgebläse dargestellt. Es zeigen:
- Fig. 1: eine Seitenansicht (in Richtung einer Rotationsachse) eines Radialgebläses, welches mit einer erfindungsgemäßen Motoraufhängung ausgerüstet ist,
- Fig. 2: einen Axialschnitt entsprechend der Schnittlinie II-II in Fig. 1,
- Fig. 3: eine Seitenansicht eines erfindungsgemäßen Elastikelementes (Einzelteil III gemäß Fig. 2)
- Fig. 4: eine axiale Stirnansicht in Pfeilrichtung IV gemäß Fig. 3,
- Fig. 5: eine Ansicht auf die andere Stirnseite in Pfeilrichtung V gemäß Fig. 3,
- Fig. 6: einen Axialschnitt in der Ebene VI-VI gemäß Fig. 5,
- Fig. 7: eine vergrößerte Axialschnittdarstellung eines in Fig. 2 mit VII gekennzeichneten Einzelteils der erfindungsgemäßen Anordnung,
- Fig. 8: eine Draufsicht dieses Einzelteils in Pfeilrichtung VIII gemäß Fig. 7,
- Fig. 9: eine Seitenansicht auf ein Ende der Motor-Tragachse und
- Fig. 10: eine axiale Stirnansicht der Tragachse in Pfeilrichtung X gemäß Fig. 9.

In den verschiedenen Figuren der Zeichnung sind gleiche Teile stets mit den gleichen Bezugszeichen versehen und werden daher in der Regel jeweils nur einmal beschrieben.

Bei dem dargestellten, bevorzugten Anwendungsbeispiel geht es darum, einen Elektromotor 1 als Lüftermotor in einem Lüftergehäuse 2 schwingungsisoliert bzw. -gedämpft aufzuhängen. Der Elektromotor 1 ist in diesem Beispiel als Außenläufermotor ausgebildet, wobei ein Stator 4 auf einer feststehenden, d.h. nicht rotierenden Tragachse 6 befestigt ist. Ein den Stator 4 umschließender Außenläufer 8 ist über Drehlager auf der Tragachse 6 drehbar gelagert, wobei der Außenläufer 8 ein Lüfterrad 10 trägt. Bei dem dargestellten Anwendungsbeispiel handelt es sich um ein doppelseitig saugendes Radialgebläse.

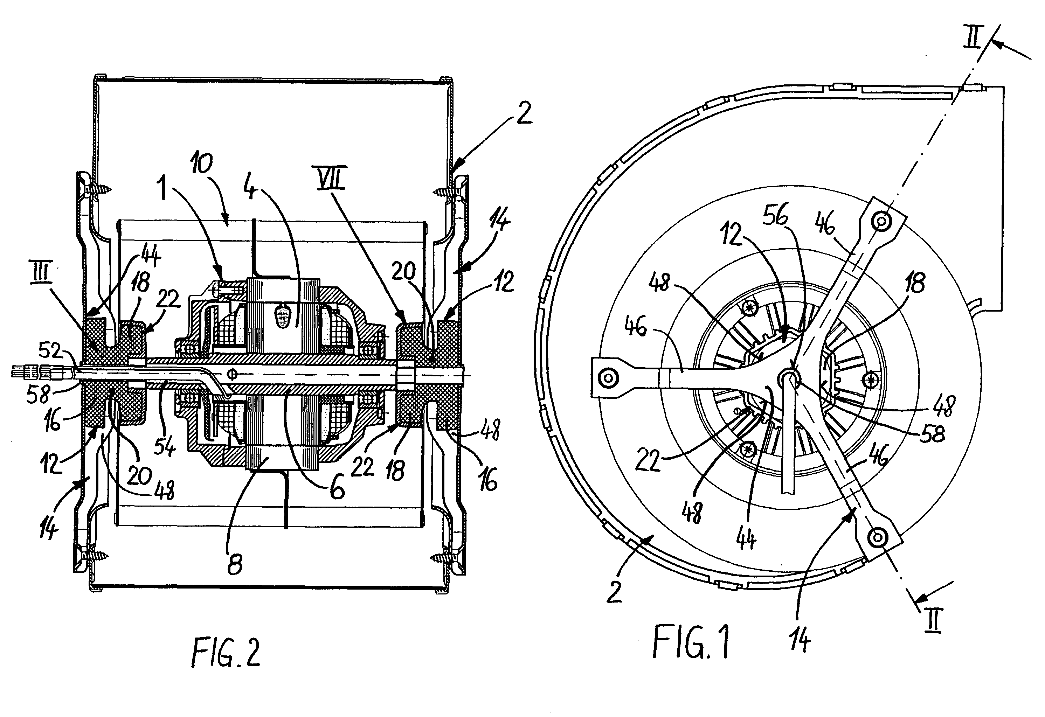

Gemäß Fig. 2 ist die Tragachse 6 zumindest mit einem ihrer Enden, vorzugsweise aber im wesentlichen gleichartig (nur spiegelsymmetrisch) mit beiden Enden über jeweils ein einstückiges Elastikelement 12 mit einem Trägerteil 14 verbunden. Jedes Trägerteil 14 ist seinerseits ortsfest am Gehäuse 2 befestigt.

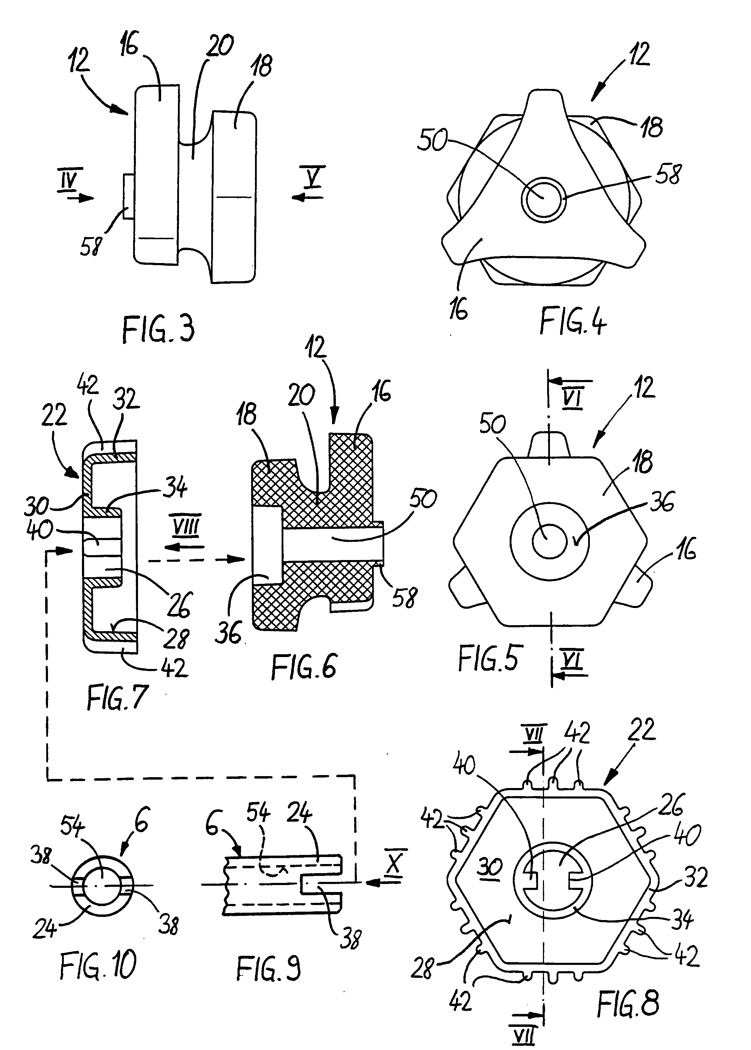

Wie sich aus Fig. 2 in Verbindung mit Fig. 3 bis 6 ergibt, ist erfindungsgemäß vorgesehen, daß das bzw. jedes Elastikelement 12 aus drei axial hintereinanderliegenden Abschnitten besteht, und zwar einem verdrehfest mit dem Trägerteil 14 verbundenen Träger-Verbindungsabschnitt 16, einem verdrehfest mit der Tragachse 6 verbundenen Motor-Verbindungsabschnitt 18 sowie einem zwischen den Verbindungsabschnitten 16, 18 angeordneten, vorteilhafterweise elastisch tordierbaren Zwischenabschnitt 20. Dabei ist das Elastikelement 12 bevorzugt über einfache Steckverbindungen mit der Tragachse 6 und auch mit dem Trägerteil 14 verbunden, wobei es allerdings wesentlich ist, daß diese Steckverbindungen einen Formschluß in Drehrichtung des Motors 1 bewirken und dadurch Relativverdrehungen verhindern.

Vorzugsweise ist der Motor-Verbindungsabschnitt 18 mittelbar über ein zusätzliches Nabenteil 22 - siehe hierzu auch Fig. 7 und 8 - mit der Tragachse 6 verbunden. Hierzu ist einerseits die Tragachse 6 mit einem endseitigen, in den Fig. 9 und 10 veranschaulichten Steckabschnitt 24 formschlüssig und dadurch verdrehfest in eine Stecköffnung 26 des Nabenteils 22 eingesteckt. Dieser Einsteckvorgang ist durch eine gestrichelte Linie zwischen den Fig. 9 und 7 veranschaulicht. Andererseits weist der Motor-Verbindungsabschnitt 18 einen von der Kreisform abweichenden, insbesondere polygonförmigen Querschnitt auf und sitzt formschlüssig und dadurch verdrehfest in einer im Querschnitt angepaßten Aufnahme 28 des Nabenteils 22. Auf diese Weise ist somit die Tragachse 6 verdrehfest mit dem Elastikelement 12 verbunden. Im dargestellten, bevorzugten Ausführungsbeispiel - vgl. insbesondere Fig. 5 und 8 - weisen der Motor-Verbindungsabschnitt 18 und dementsprechend auch die Aufnahme 28 des Nabenteils 22 jeweils einen regelmäßig polygonförmigen, und zwar vorzugsweise einen sechseckigen Querschnitt auf. Die Erfindung ist hierauf jedoch keineswegs beschränkt.

Wie sich aus Fig. 7 und 8 ergibt, ist das Nabenteil 22 bevorzugt kappenartig mit einem sich senkrecht bzw. radial zur Tragachse 6 erstreckenden Boden 30, einer den Querschnitt der Aufnahme 28 (und damit auch den Querschnitt des Motor-Verbindungsabschnittes 18) bestimmenden, axial in Richtung des Trägerteils 14 weisenden Umfangswandung 32 sowie mit einem inneren, zentrischen, die Stecköffnung 26 für die Tragachse 6 bzw. deren endseitigen Steckabschnitt 24 aufweisenden bzw. umschließenden Ringstegansatz 34 ausgebildet. Gemäß Fig. 6 weist der Motor-Verbindungsabschnitt 18 des Elastikelements 12 eine zentrische Aufnahmevertiefung 36 für den axialen Ringstegansatz 34 des Nabenteils 22 und den darin formschlüssig sitzenden Steckabschnitt 24 der Tragachse 6 auf. Das kappenartige Nabenteil 22 läßt sich ausgehend von Fig. 7 in Richtung des gestrichelt zur Fig. 6 führenden Pfeils formschlüssig auf den Motor-Verbindungsabschnitt 18 aufstecken.

Zur formschlüssigen, verdrehfesten Verbindung zwischen dem Steckabschnitt 24 der Tragachse 6 und dem Nabenteil 22 ist im dargestellten Beispiel bevorzugt vorgesehen, daß der Steckabschnitt 24 einen vorzugsweise diametral verlaufenden Axialschlitz 38 aufweist (Fig. 9 und 10), wobei innerhalb der Stecköffnung 26 des Nabenteils 22 (s. Fig. 8) mindestens ein radialer Ansatz 40 gebildet ist, der formschlüssig in den Axialschlitz 38 des Steckabschnitts 24 eingreift. Dabei bestimmt der Axialschlitz 38 durch seine axiale Länge die Einstecktiefe in die Stecköffnung 26, d.h. das Schlitzende bewirkt eine Einsteckbegrenzung. Dabei besitzt der Steckabschnitt 24 vorzugsweise einen kreisförmigen Außenquerschnitt, und die Stecköffnung 26 weist einen im wesentlichen ebenfalls angepaßt kreisförmigen Innenquerschnitt auf (abgesehen von den vorzugsweise zwei diametral gegenüberliegenden, radialen Ansätzen 40). Durch diese bevorzugte Verbindung zwischen der Tragachse 6 und dem Nabenteil 22 kann vorteilhafterweise auch eine gute, in Axialrichtung kraftschlüssige, nahezu Umfangsspiel-freie Verbindung erreicht werden.

Alternativ zu der bevorzugten Ausführung ist es ebenfalls möglich, den Steckabschnitt 24 und die Stecköffnung 26 mit einer von der Kreisform abweichenden Außenquerschnittskontur, z.B. polygonförmig auszubilden, um eine verdrehsichere Steckverbindung zu erreichen.

Das Nabenteil 22 besteht vorzugsweise aus Metall, wobei insbesondere Zinkdruckguß geeignet ist (vorzugsweise eine Legierung Z410 gemäß DIN 1734/1). Damit ergibt sich die vorteilhafte Möglichkeit, das Nabenteil 22 zur Abführung von Motorwärme zu verwenden. Dazu ist es zweckmäßig, wenn das Nabenteil 22 mit außenseitigen Kühlrippen 42 ausgestattet ist (Fig. 7 und 8). Hierdurch wird vorteilhafterweise eine effektive Abführung der im Motor 1 entstehenden Wärme an die Umgebungsluft erreicht, indem die Wärme zunächst vom Stator 4 an die - zweckmäßig ebenfalls aus Metall bestehende - Tragachse 6 und von dieser an das Nabenteil 22 übertragen wird, wobei das Nabenteil 22 die Wärme dann an die Umgebungsluft - unterstützt durch die Kühlrippen 42 - effektiv abgibt. Wie sich aus Fig. 7 und 8 ergibt, sind die Kühlrippen 42 vorzugsweise etwa radial an der Umfangswandung 32 des kappenartigen Nabenteils 22 einstückig angeformt. Bei der Anwendung als Radialgebläse liegt das Nabenteil 22 vorteilhafterweise im Ansaugbereich und wird daher intensiv von der angesaugten Luft umströmt, was zu einer guten Kühlung führt.

Was nun den Träger-Verbindungsabschnitt 16 des Elastikelements 12 betrifft, so sitzt dieser ebenfalls mit einem von der Kreisform abweichenden Querschnitt formschlüssig und somit verdrehfest in einer entsprechend angepaßten Aufnahme 44 des Trägerteils 14 (s. Fig. 2). Jedes Trägerteil 14 ist - in an sich bekannter Weise - als Tragstern mit insbesondere drei radialsymmetrisch angeordneten Tragarmen 46 ausgebildet. Dabei ist die Aufnahme 44 für den Träger-Verbindungsabschnitt 16 in seinem mittigen Bereich mit insbesondere im wesentlichen dreieckigem Querschnitt gebildet. Daher besitzt der Träger-Verbindungsabschnitt 16 ebenfalls einen angepaßten, etwa dreieckigen Querschnitt; vgl. hierzu vor allem Fig. 4. Zweckmäßigerweise ist jedes Trägerteil 14 als Blechstanzteil mit umgebogenen, die Aufnahme 44 begrenzenden Wandungen 48 ausgebildet (Fig. 2).

Der Zwischenabschnitt 20 des Elastikelements 12 weist bevorzugt einen im wesentlichen kreisförmigen Querschnitt auf. Gemäß Fig. 3 ist dieser Querschnitt zweckmäßigerweise gegenüber den Querschnitten der beiden benachbarten Verbindungsabschnitte 16, 18 verjüngt. Die Isolations- und Dämpfungseigenschaften können durch Auslegung der Länge und des Querschnitts des Zwischenabschnittes 20 sowie durch Auswahl eines bestimmten elastomeren Materials beeinflußt werden, wie dies eingangs bereits erläutert wurde.

Es ist zudem vorteilhaft, wenn das Elastikelement 12 eine axial durchgehende, zentrische Durchführöffnung 50 für Motor-Anschlußleiter 52 (s. Fig. 2) aufweist. Diesbezüglich weist die Tragachse 6 zumindest einendig einen axialen zentrischen Führungskanal 54 für die Anschlußleiter 52 auf. Dieser Führungskanal 54 mündet vorzugsweise in einem Anschlußbereich des Elektromotors 1 etwa radial oder schräg nach außen, wie dies in Fig. 2 dargestellt ist. Das auf der Anschlußseite angeordnete Trägerteil 14 weist ebenfalls eine zentrische Duchführöffnung 56 für die Anschlußleiter 52 auf (siehe Fig. 1). Dabei ist es vorteilhaft, wenn das Elastikelement 12 einen axial in diese Durchführöffnung 56 des Trägerteils 14 eingreifenden Ringstegansatz 58 zum Schutz der Anschlußleiter 52 gegen mechanische Beschädigungen durch den Lochrand der Durchführöffnung 56 aufweist (vgl. hierzu auch Fig. 3, 4 und 6). Dies bedeutet, daß durch den Ringstegansatz 58 des Elastikelements 12 praktisch die Durchführöffnung 56 abgepolstert wird.

Zusätzlich zu den bevorzugt vorgesehenen formschlüssigen Steckverbindungen kann vorgesehen sein, daß das Elastikelement 12 mit dem Nabenteil 22 und/oder mit dem Trägerteil 12 auch stoffschlüssig verbunden ist. Dieser ergänzende Stoffschluß kann beispielsweise dadurch erreicht werden, daß vor dem Zusammenstecken Silikon oder dergleichen eingebracht wird.

Das Elastikelement 12 besteht bevorzugt aus einem elastomeren Material mit einer Härte etwa im Bereich von 50 - 60 Shore A. Besonders geeignet ist EPDM (Kurzzeichen nach DIN 7728, Teil 1 für Ethylen/Propylen-Dien-Terpolymere bzw. Ethylen-Propylen-Elastomere). Die erfindungsgemäße Ausgestaltung bzw. Funktionsweise erlaubt aber auch Elemente aus einem Material mit höherer Shore-Härte, wodurch dessen Alterungsbeständigkeit und mechanische Festigkeit verbessert wird.

In dem bevorzugten Ausführungsbeispiel, wobei beide Enden der Tragachse 6 gleichartig über jeweils ein Elastikelement 12 gehaltert sind, werden die formschlüssigen Steckverbindungen vorteilhafterweise allein durch axiales Verspannen der Trägerteile 14 in axialer Richtung fixiert, indem die Trägerteile 14 mit definiertem Abstand voneinander am Gehäuse 2 befestigt werden. Dabei hat sich vorteilhafterweise gezeigt, daß eine axiale Verspannung der Elastikelemente 12 nahezu ohne Einfluß auf die Torsionssteifigkeit ist.

Die Erfindung ist nicht auf die dargestellten und beschriebenen Ausführungsbeispiele beschränkt, sondern umfaßt auch alle im Sinne der Erfindung gleichwirkenden Ausführungen. So ist die Erfindung grundsätzlich auch für Innenläufermotoren geeignet, wobei die Elastikelemente 12 zwischen an den Lagerschilden angeformten Trägerteilen und einer äußeren Halterung positioniert sind. Die Welle des Innenläufermotors kann dabei einseitig oder auch beidseitig durch die axial durchgehende zentrische Durchführöffnung 40 des Elastikelementes 12 nach außen geführt sein.

## Patentansprüche

1. Anordnung zur schwingungsisolierenden bzw. -dämpfenden Aufhängung eines Elektromotors (1), insbesondere eines Lüftermotors in einem Lüftergehäuse (2), wobei ein nicht-rotierendes Motor-Tragelement (6) zumindest einseitig über ein einstückiges Elastikelement (12) mit einem Trägerteil (14) verbunden ist,
**dadurch gekennzeichnet,**
**dass** das Elastikelement (12) aus drei axial hintereinanderliegenden Abschnitten besteht, und zwar einem verdrehfest über eine in Drehrichtung des Motors (1) formschlüssige und dadurch Relativverdrehungen verhindernde Steckverbindung mit dem Trägerteil (14) verbundenen Träger-Verbindungsabschnitt (16), einem ebenfalls verdrehfest über eine in Drehrichtung des Motors (1) formschlüssige und dadurch Relatiwerdrehungen verhindernde Steckverbindung mit dem Tragelement (6) verbundenen Motor-Verbindungsabschnitt (18) sowie einem axial zwischen den beiden Verbindungsabschnitten (16,18) angeordneten, elastisch tordierbaren Zwischenabschnitt (20).

2. Anordnung nach Anspruch 1,
**dadurch gekennzeichnet, daß** der Elektromotor (1) als Innenläufermotor ausgebildet ist, wobei das Tragelement an einem Motor-Lagerschild befestigt oder angeformt ist und vorzugsweise eine Motorwelle zumindest einendig durch eine zentrische Durchführöffnung des Elastikelementes geführt ist.

3. Anordnung nach Anspruch 1,
**dadurch gekennzeichnet, daß** der Elektromotor (1) als Außenläufermotor ausgebildet ist, wobei das Tragelement (6) als eine längliche, zumindest mit einem ihrer Enden über das Elastikelement (12) gehalterte Tragachse ausgebildet ist, auf der einerseits ein Stator (4) des Elektromotors (1) verdrehfest sitzt und andererseits ein Außenläufer (8) drehbar gelagert ist.

4. Anordnung nach Anspruch 3,
**dadurch gekennzeichnet, daß** der Motor-Verbindungsabschnitt (18) mittelbar über ein Nabenteil (22) mit der Tragachse (6) verbunden ist.

5. Anordnung nach Anspruch 4,
**dadurch gekennzeichnet, daß** die Tragachse (6) mit einem endseitigen Steckabschnitt (24) formschlüssig und dadurch verdrehfest in eine Stecköffnung (26) des Nabenteils (22) eingesteckt ist.

6. "Anordnung nach Anspruch 4 oder 5,
**dadurch gekennzeichnet, daß** der Motor-Verbindungsabschnitt (18) einen von der Kreisform abweichenden, insbesondere polygonförmigen Querschnitt aufweist und formschlüssig und dadurch verdrehfest in einer im Querschnitt entsprechenden Aufnahme (28) des Nabenteils (22) sitzt.

7. Anordnung nach Anspruch 6,
**dadurch gekennzeichnet, daß** der Motor-Verbindungsabschnitt (18) und dementsprechend auch die Aufnahme (28) des Nabenteils (22) jeweils einen regelmäßig polygonförmigen, vorzugsweise sechseckigen Querschnitt aufweisen.

8. Anordnung nach einem oder mehreren der Ansprüche 4 bis 7,
**dadurch gekennzeichnet, daß** das Nabenteil (22) kappenartig mit einem sich senkrecht zur Tragachse (6) erstreckenden Boden (30) einer den Querschnitt der Aufnahme (28) bestimmenden, axial in Richtung des Trägerteils (14) weisenden Umfangswandung (32) und einem inneren, zentrischen, die Stecköffnung (26) für die Tragachse (6) umschließenden Ringstegansatz (34) ausgebildet ist.

9. Anordnung nach Anspruch 8,
**dadurch gekennzeichnet, daß** der Motor-Verbindungsabschnitt (18) des Elastikelementes (12) eine zentrische Aufnahmevertiefung (36) für den axialen Ringstegansatz (34) des Nabenteils (22) und den darin formschlüssig sitzenden Steckabschnitt (24) der Tragachse (6) aufweist.

10. Anordnung nach einem oder mehreren der Ansprüche 5 bis 9,
**dadurch gekennzeichnet, daß** der Steckabschnitt (24) der Tragachse (6) einen vorzugsweise diametral verlaufenden Axialschlitz (38) aufweist, wobei innerhalb der Stecköffnung (26) des Nabenteils (22) mindestens ein radialer Ansatz (40) gebildet ist, der formschlüssig in den Axialschlitz (38) des Steckabschnittes (24) eingreift.

11. Anordnung nach einem oder mehreren der Ansprüche 4 bis 10,
**dadurch gekennzeichnet, daß** das Nabenteil (22) aus Metall, insbesondere Zinkdruckguß, besteht und außenseitige Kühlrippen (42) aufweist.

12. Anordnung nach einem oder mehreren der Ansprüche 1 bis 11,
**dadurch gekennzeichnet, daß** der Träger-Verbindungsabschnitt (16) des Elastikelementes (12) mit einem von der Kreisform abweichenden Querschnitt formschlüssig und somit verdrehfest in einer entsprechend angepaßten Aufnahme (44) des Trägerteils (14) sitzt.

13. Anordnung nach Anspruch 12,
**dadurch gekennzeichnet, daß** das Trägerteil (14) als Tragstern mit insbesondere drei radialsymmetrischen Tragarmen (46) ausgebildet ist und in seinem mittigen Bereich die Aufnahme (44) mit insbesondere im wesentlichen dreieckigem Querschnitt aufweist.

14. Anordnung nach einem oder mehreren der Ansprüche 1 bis 13,
**dadurch gekennzeichnet, daß** der Zwischenabschnitt (20) des Elastikelementes (12) einen kreisförmigen Querschnitt aufweist, der vorzugsweise gegenüber den Querschnitten der beiden Verbindungsabschnitte (16,18) verjüngt ist.

15. Anordnung nach einem oder mehreren der Ansprüche 1 bis 14,
**dadurch gekennzeichnet, daß** das Elastikelement (12) eine axial durchgehende, zentrische Durchführöffnung (50) für Motor-Anschlußleiter (52) aufweist.

16. Anordnung nach einem oder mehreren der Ansprüche 3 bis 15,
**dadurch gekennzeichnet, daß** die Tragachse (6) endseitig einen axialen, zentrischen Führungskanal (54) für Motor-Anschlußleiter (52) aufweist, wobei der Führungskanal (54) vorzugsweise in einem Anschlußbereich des Elektromotors (1) radial oder schräg nach außen mündet.

17. Anordnung nach einem oder mehreren der Ansprüche 1 bis 16,
**dadurch gekennzeichnet, daß** das Trägerteil (14) eine zentrische Durchführöffnung (56) für Motor-Anschlußleiter (52) aufweist, wobei vorzugsweise das Elastikelement (12) einen axial in die Durchführöffnung (56) eingreifenden Ringstegansatz (58) zum Schutz der Anschlußleiter (52) aufweist.

18. Anordnung nach einem oder mehreren der Ansprüche 1 bis 17,
**dadurch gekennzeichnet, daß** das Elastikelement (12) mit dem Tragelement (6) bzw. dem Nabenteil (22) und/oder mit dem Trägerteil (14) stoffschlüssig verbunden ist.

19. Anordnung nach einem oder mehreren der Ansprüche 1 bis 18,
**dadurch gekennzeichnet, daß** das Elastikelement (12) aus einem elastomeren Material mit einer Härte etwa im Bereich von 50 bis 60 Shore-A, insbesondere aus EPDM, besteht.

20. Anordnung nach einem oder mehreren der Ansprüche 1 bis 19,
**dadurch gekennzeichnet, daß** beide Enden des Tragelementes (6) gleichartig über jeweils ein Elastikelement (12) gehaltert sind.

21. Anordnung nach Anspruch 20 und einem oder mehreren der Ansprüche 1 bis 19,
**dadurch gekennzeichnet, daß** die formschlüssigen Steckverbindungen durch axiale Verspannung der Trägerteile (14) in axialer Richtung fixiert sind.

## Claims

1. Arrangement for the vibration-isolating or vibration-damping suspension of an electric motor (1), in particular a fan motor, in a fan housing (2), a non-rotating motor-supporting element (6) being connected to a support part (14) at least on one side via an integral elastic element (12), **characterized in that** the elastic element (12) consists of three sections lying axially one behind another, in precise terms of a support connecting section (16) connected to the support part (14) in a torsion-resistant manner via a plug-in connection which is positive in the direction of rotation of the motor (1) and thereby prevents relative distortions, of a motor connecting section (18) connected to the supporting element (6) likewise in a torsion-resistant manner via a plug-in connection which is positive in the direction of rotation of the motor (1) and thereby prevents relative distortions, and also of an elastically twistable intermediate section (20) arranged axially between the two connecting sections (16, 18).

2. Arrangement according to Claim 1, **characterized in that** the electric motor (1) is designed as an internal rotor motor, the supporting element being secured or integrally formed on a motor end shield, and a motor shaft preferably being guided, at least at one end, through a central lead-through opening in the elastic element.

3. Arrangement according to Claim 1, **characterized in that** the electric motor (1) is designed as an external rotor motor, the supporting element (6) being designed as an elongated supporting spindle which is mounted, at least by one of its ends, via the elastic element (12) and on which at one end a stator (4) of the electric motor (1) is seated in a torsion-resistant manner, and at the other end an external rotor (8) is rotatably mounted.

4. Arrangement according to Claim 3, **characterized in that** the motor connecting section (18) is indirectly connected to the supporting spindle (6) via a hub part (22).

5. Arrangement according to Claim 4, **characterized in that** the supporting spindle (6) is inserted by one end-side plug-in section (24) positively and thereby in a torsion-resistant manner into a plug-in opening (26) in the hub part (22).

6. Arrangement according to Claim 4 or 5, **characterized in that** the motor connecting section (18) has a cross section which deviates from the circular form and is, in particular, polygonal, and is seated positively and thereby in a torsion-resistant manner in a socket (28), of corresponding cross section, of the hub part (22).

7. Arrangement according to Claim 6, **characterized in that** the motor connecting section (18) and, accordingly, also the socket (28) of the hub part (22) in each case have a regularly polygonal, preferably hexagonal, cross section.

8. Arrangement according to one or more of Claims 4 to 7, **characterized in that** the hub part (22) is designed in the manner of a cap with a base (30) which extends perpendicularly with respect to the supporting spindle (6), a circumferential wall (32) which determines the cross section of the socket (28) and points axially in the direction of the support part (14), and an inner, central annular extension (34) which surrounds the plug-in opening (26) for the supporting spindle (6).

9. Arrangement according to Claim 8, **characterized in that** the motor connecting section (18) of the elastic element (12) has a central socket recess (36) for the axial annular extension (34) of the hub part (22) and the plug-in section (24), which is seated positively therein, of the supporting spindle (6).

10. Arrangement according to one or more of Claims 5 to 9, **characterized in that** the plug-in section (24) of the supporting spindle (6) has an axial slot (38) preferably running diametrically, there being formed within the plug-in opening (26) of the hub part (22) at least one radial projection (40) which engages positively into the axial slot (38) of the plug-in section (24).

11. Arrangement according to one or more of Claims 4 to 10, **characterized in that** the hub part (22) is made of metal, in particular die-cast zinc, and has external cooling ribs (42).

12. Arrangement according to one or more of Claims 1 to 11, **characterized in that** the support connecting section (16) of the elastic element (12) having a cross section which deviates from the circular form is seated positively and hence in a torsion-resistant manner in an appropriately matched socket (44) of the support part (14).

13. Arrangement according to Claim 12, **characterized in that** the support part (14) is designed as a supporting star having, in particular, three radially symmetrical supporting arms (46) and in its central region has the socket (44) which has, in particular, an essentially triangular cross section.

14. Arrangement according to one or more of Claims 1 to 13, **characterized in that** the intermediate section (20) of the elastic element (12) has a circular cross section which is preferably tapered with respect to the cross sections of the two connecting sections (16, 18).

15. Arrangement according to one or more of Claims 1 to 14, **characterized in that** the elastic element (12) has an axially continuous, central lead-through opening (50) for motor connecting leads (52).

16. Arrangement according to one or more of Claims 3 to 15, **characterized in that** the supporting spindle (6) has, at one end, an axial, central guide channel (54) for motor connecting leads (52), the guide channel (54) preferably leading radially or obliquely outwards into a connecting region of the electric motor (1).

17. Arrangement according to one or more of Claims 1 to 16, **characterized in that** the support part (14) has a central lead-through opening (56) for motor connecting leads (52), the elastic element (12) preferably having an annular extension (58), engaging axially into the lead-through opening (56), for protecting the connecting leads (52).

18. Arrangement according to one or more of Claims 1 to 17, **characterized in that** the elastic element (12) is bonded to the supporting element (6) or the hub part (22) and/or to the support part (14).

19. Arrangement according to one or more of Claims 1 to 18, **characterized in that** the elastic element (12) is composed of an elastomeric material having a hardness approximately in the region of 50 - 60 Shore-A, in particular of EPDM.

20. Arrangement according to one or more of Claims 1 to 19, **characterized in that** both ends of the supporting element (6) are similarly mounted via a respective elastic element (12).

21. Arrangement according to Claim 20 and one or more of Claims 1 to 19, **characterized in that** the positive plug-in connections are fixed in the axial direction by axial deformation of the support parts (14).

## Revendications

1. Dispositif pour la suspension avec isolation ou amortissement des vibrations pour un moteur électrique (1), en particulier pour un moteur de ventilateur placé dans un carter de ventilateur (2), dans lequel un élément porteur non rotatif (6) de support du moteur est relié à une partie monture (14), au moins d'un côté, par un élément élastique (12) en une seule pièce, **caractérisé,**
**en ce que** l'élément élastique (12) est composé de trois segments placés l'un derrière l'autre dans la direction axiale, et, plus précisément, d'un segment de liaison à la monture (16), relié solidairement en rotation à la partie monture (14) par une liaison à emboîtement opérant par complémentarité de forme dans la direction de la rotation du moteur (1) et qui interdit ainsi les rotations relatives, un segment de liaison au moteur (18) relié également solidairement en rotation à l'élément porteur (6) par l'intermédiaire d'une liaison à emboîtement opérant par complémentarité de forme dans la direction de la rotation du moteur (1) et qui interdit par ce moyen les rotations relatives, ainsi qu'un segment intermédiaire (20), capable de se tordre élastiquement et disposé axialement entre les deux segments de liaison (16, 18).

2. Dispositif selon la revendication 1,
**caractérisé en ce que** le moteur électrique (1) est constitué par un moteur à rotor intérieur, l'élément porteur étant fixé à un flasque-palier du moteur ou venu de matière avec ce flasque et un arbre de moteur étant de préférence guidé au moins à une extrémité à travers une ouverture de passage centrée de l'élément élastique.

3. Dispositif selon la revendication 1,
**caractérisé en ce que** le moteur électrique (1) est constitué par un moteur à rotor extérieur, l'élément porteur (6) étant constitué par un axe porteur de forme allongée, tenu au moins par une des ses extrémités par intermédiaire de l'élément élastique (12), et sur lequel, d'une part un stator (4) du moteur électrique (1) est monté bloqué en rotation et, d'autre part, un rotor extérieur (8) est monté libre en rotation.

4. Dispositif selon la revendication 3,
**caractérisé en ce que** le segment de liaison au moteur (18) est relié indirectement à l'axe porteur (6) par l'intermédiaire d'une partie moyeu (22).

5. Dispositif selon la revendication 4,
**caractérisé en ce que** l'axe porteur (6) est emboîté par un segment d'emboîtement terminal (24) dans une ouverture emboîtement (26) de la partie moyeu (22) avec liaison opérant par complémentarité de forme, et ainsi bloquée en rotation.

6. Dispositif selon la revendication 4 ou 5,
**caractérisé en ce que** le segment de liaison au moteur (18) présente une section différente de la forme circulaire, en particulier polygonale, et est engagé par une liaison opérant par une complémentarité, et ainsi bloquée en rotation, dans un logement (28) de la partie moyeu (22) qui lui correspond en section.

7. Dispositif selon la revendication 6,
**caractérisé en ce que** le segment de liaison au moteur (18) et, de façon correspondante, également le logement (28) de la partie moyeu (22) présentent chacun une section polygonale régulière, de préférence hexagonale.

8. Dispositif selon une ou plusieurs des revendications 4 à 7,
**caractérisé en ce que** la partie moyeu (22) est réalisée en forme de chapeau, avec un fond (30) qui s'étend perpendiculairement à l'axe porteur (6), une paroi périphérique (32) qui détermine la section du logement (28), et qui pointe axialement en direction de la partie monture (14), et un prolongement intérieur, central (32), en forme de nervure annulaire, qui entoure l'ouverture d'emboîtement (26) prévue pour l'axe porteur (6).

9. Dispositif selon la revendication 8,
**caractérisé en ce que** le segment de liaison au moteur (18) de l'élément élastique (12) présente un approfondissement de logement central (36) prévu pour le prolongement axial (34) en forme de nervure annulaire de la partie moyeu (22) et pour le segment d'emboîtement (24) de l'axe porteur (6) qui s'y loge avec liaison par complémentarité de forme.

10. Dispositif selon une ou plusieurs des revendications 5 à 9,
**caractérisé en ce que**
le segment d'emboîtement (24) de l'axe porteur (6) présente une fente axiale (38) qui s'étend de préférence diamétralement, cependant qu'à l'intérieur de l'ouverture emboîtement (26) de la partie moyeu (22), est formée au moins une saillie radiale (40) qui s'emboîte par complémentarité de forme dans la fente axiale (38) du segment d'emboîtement (24).

11. Dispositif selon une ou plusieurs des revendications 4 à 10,
**caractérisé en ce que** la partie moyeu (22) est faite de métal, en particulier de zinc coulé sous pression et présente des nervures de refroidissement extérieures (42).

12. Dispositif selon une ou plusieurs des revendications 1 à 11,
**caractérisé en ce que** le segment de liaison à la monture (16) de l'élément élastique (12) est monté; au moyen d'une section différente de la forme circulaire, dans un logement (44) de la partie monture (14) qui est adaptée de façon correspondante, en formant une liaison par complémentarité de forme et donc bloquée en rotation,

13. Dispositif selon la revendication 12,
**caractérisé en ce que** la partie monture (14) est constituée par une étoile porteuse possédant en particulier trois bras porteurs (46) présentant une symétrie radiale, et qu'elle présente dans sa région centrale le logement (44) qui présente une section en particulier sensiblement triangulaire.

14. Dispositif selon une ou plusieurs des revendications 1 à 13,
**caractérisé en ce que** le segment intermédiaire (20) de l'élément élastique (12) présente une section circulaire qui est de préférence amincie par rapport aux sections des deux segments de liaison (16, 18).

15. Dispositif selon une ou plusieurs des revendications 1 à 14,
**caractérisé en ce que** l'élément élastique (12) présente une ouverture de passage (50) continue dans la direction axiale, centrée, pour les conducteurs (52) de connexion du moteur.

16. Dispositif selon une ou plusieurs des revendications 3 à 15,
**caractérisé en ce que** l'axe porteur (6) présente à une extrémité un canal de guidage axial, central (54) pour des conducteurs (52) de connexion du moteur, le canal de guidage (54) débouchant à l'extérieur dans une direction radiale ou oblique, de préférence dans une région de connexion du moteur électrique (1).

17. Dispositif selon une ou plusieurs des revendications 1 à 16,
**caractérisé en ce que** la partie monture (14) présente une ouverture de passage centrale (56) pour les conducteurs (52) de connexion du moteur, l'élément élastique (12) présentant de préférence un prolongement (58) en forme de nervure annulaire, qui s'emboîte axialement dans l'ouverture de passage (56) et sert à la protection des conducteurs de connexion (52).

18. Dispositif selon une ou plusieurs des revendications 1 à 17,
**caractérisé en ce que** l'élément élastique (12) est relié à l'élément porteur (6) ou à la partie moyeu (22) et/ou à la partie monture (14) par une liaison opérant par matière.

19. Dispositif selon une ou plusieurs des revendications 1 à 18,
**caractérisé en ce que** l'élément élastique (12) est fait d'une matière élastomère qui possède une dureté à peu près dans l'intervalle des 50 à 60 Shore-A, en particulier d'un EPDM.

20. Dispositif selon une ou plusieurs des revendications 1 à 19,
**caractérisé en ce que** les deux extrémités de l'élément porteur (6) sont tenues de la même façon chacune par l'intermédiaire d'un élément élastique (12).

21. Dispositif selon la revendication 20 et une ou plusieurs des revendications 1 à 19,
**caractérisé en ce que** les liaisons à emboîtement opérant par complémentarité de forme sont bloquées dans leur direction axiale par une contrainte axiale de la partie monture (14).
